# EUROPÄISCHE PATENTSCHRIFT

(11) **EP 3 966 073 B1**
(45) Veröffentlichungstag und Bekanntmachung des Hinweises auf die Patenterteilung: **09.07.2025**
(21) Anmeldenummer: 20725149.7
(22) Anmeldetag: 08.05.2020
(51) Int. Cl.: B60N 2/80, B60N 2/888

(54) **KOPFSTÜTZE UND FAHRZEUGSITZ**
HEADREST AND VEHICLE SEAT
APPUIE-TÊTE ET SIÈGE DE VÉHICULE

(30) Priorität: 10.05.2019 DE 102019206828
(43) Veröffentlichungstag der Anmeldung: 16.03.2022
(73) Patentinhaber: VOLKSWAGEN AKTIENGESELLSCHAFT, 38440 Wolfsburg (DE)
(72) Erfinder: WINKLER, Markus, 38557 Osloß (DE)
(74) Vertreter: Löbbecke, Carsten
(86) Internationale Anmeldenummer: PCT/EP2020/062801
(87) Internationale Veröffentlichungsnummer: WO 2020/229324

(56) Entgegenhaltungen:
- WO-A1-2017/005660
- WO-A2-2013/004696
- DE-A1- 10 045 070
- DE-A1- 102008 019 193
- JP-U- S57 107 451

## Beschreibung

Die Erfindung betrifft eine Kopfstütze für einen Fahrzeugsitz, mit einem Polsterträger, mit einem an dem Polsterträger angeordneten oder anordenbaren Polster, und mit zumindest einer sich von dem Polsterträger vertikal erstreckenden Haltestange zum Befestigen der Kopfstütze an dem Fahrzeugsitz, wobei der Polsterträger auf einer sich horizontal und vertikal erstreckenden Frontseite einen Kopfaufprallbereich aufweist.

Weiterhin betrifft die Erfindung einen Fahrzeugsitz mit einer derartigen Kopfstütze.

Kopfstützen und Fahrzeugsitze der eingangs genannten Art sind aus dem Stand der Technik bereits bekannt. So offenbart beispielsweise die Offenlegungsschrift DE 10 2008 019 193 A1 eine Kopfstütze für einen Fahrzeugsitz mit einem Polsterträger, an welchem ein Polster sowie eine Haltestange befestigbar sind. Das Polster dient zur bequemen Kopfanlage eines Benutzers, die Haltestütze dient zum Anordnen und Befestigen des Polsterträgers an dem Fahrzeugsitz. Üblicherweise weist eine Kopfstütze zwei derartige Haltestangen auf, die in Aufnahmen des Fahrzeugsitzes eingeschoben und in den Aufnahmen verrastet werden, um die Kopfstütze an dem Fahrzeugsitz zu positionieren und zu arretieren. Um die Struktur der Kopfstütze zu versteifen, schlägt die oben genannte Druckschrift vor, eine Vielzahl einander benachbarter Vertiefungen und der Hervorhebungen zum Erhöhen der mechanischen Stabilität vorzusehen. Dadurch wird der Polsterträger, der als dünnwandiger Schalenkörper ausgebildet ist, versteift, um insbesondere Aufprallkräfte sicher aufzunehmen, wenn der Kopf eines Benutzers gegen den Polsterträger beziehungsweise die Kopfstütze trifft. Der Polsterträger weist dabei einen Kopfaufprallbereich auf, welcher zur vorteilhaften Aufnahme der Aufprallkräfte dient. Eine ähnliche Kopfstütze wird auch in der Offenlegungsschrift WO 2017/005660 A1 offenbart. Dabei wird vorgeschlagen, im Kopfaufprallbereich eine Rippenstruktur von beabstandet zueinander angeordneten und lateral voneinander getrennten Rippenelementen vorzusehen. Die Offenlegungsschrift DE 100 45 070 A1 offenbart eine Kopfstütze mit einem Polsterträger, welcher waagerecht verlaufende und im Querschnitt schräg nach unten gerichtete Rillen aufweist.

Der Erfindung liegt die Aufgabe zugrunde, eine verbesserte Kopfstütze für einen Fahrzeugsitz zu schaffen, die eine verbesserte Positionierung eines Kopfes bei einem Aufprall auf den Kopfaufprallbereich sowie eine verbesserte Aufnahme von Aufprallkräften gewährleistet.

Die der Erfindung zugrundeliegende Aufgabe wird durch eine Kopfstütze mit den Merkmalen des Anspruchs 1 gelöst. Diese hat den Vorteil, dass aufgrund einer vorteilhaften Gestaltung des Polsterträgers zum einen Aufprallkräfte vorteilhaft in den Polsterträger eingeleitet werden, und dass zum anderen eine vorteilhafte Positionierung des Kopfs an dem Polsterträger erfolgt, die insbesondere ein Abrutschen des Kopfs des Benutzers von der Kopfstütze verhindert. Durch die vorteilhafte Ausbildung wird gewährleistet, dass der Kopf beim Aufprallen vorteilhaft an der Kopfstütze positioniert und gehalten wird. Erfindungsgemäß ist dazu vorgesehen, dass der Polsterträger in dem Kopfaufprallbereich ein geschlossenes Wellenprofil mit vertikal benachbarten und sich horizontal insbesondere parallel zueinander und vorzugsweise geradlinig erstreckenden Wellenbergen aufweist. Der Kopfaufprallbereich ist somit durch ein geschlossenes Profil, nämlich ein geschlossenes Wellenprofil gebildet. Die Wellen verlaufen dabei horizontal, und erstrecken sich somit quer, insbesondere senkrecht zur Längserstreckung der Haltestange. Durch das Vorsehen mehrerer Wellenberge liegen diese dann vertikal übereinander beziehungsweise erfindungsgemäß vertikal durch Wellentäler voneinander getrennt benachbart. Durch die vorteilhafte Ausbildung als geschlossenes Wellenprofil ergibt sich eine vorteilhafte Kopfpositionierung bei einem Aufprall gegen die Kopfstütze. Darüber hinaus wird durch das geschlossene Wellenprofil eine hohe Robustheit der Kopfstütze bei dem Aufprall gewährleistet, welche das Verletzungsrisiko für den Benutzer reduziert.

Gemäß einer bevorzugten Ausführungsform der Erfindung ist der Polsterträger einteilig ausgebildet. Dadurch wird das Wellenprofil durch den Polsterträger selbst ausgebildet. Dadurch ergibt sich der Vorteil einer einfachen Handhabung des Polsterträgers sowie einer einfachen und schnellen Montage. Vorzugsweise ist der Polsterträger aus Kunststoff gefertigt, wodurch er kostengünstig herstellbar ist und ein geringes Gewicht aufweist.

Gemäß einer alternativen Ausführungsform der Erfindung ist der Polsterträger mehrteilig, insbesondere zweiteilig ausgebildet, mit einem die Haltestange tragenden Basisteil und mit einem das Wellenprofil aufweisenden Profilelement. Durch die mehrteilige Ausbildung wird die Herstellung vereinfacht und Herstellungskosten werden reduziert. Darüber hinaus können unterschiedliche Wellenprofile an einer Kopfstütze, beispielsweise in Abhängigkeit von weiteren das die Kopfstütze aufweisenden Kraftfahrzeugs betreffenden Randbedingungen, angeordnet werden, wodurch ein vorteilhaftes Kopfstützensystem entsteht, das einfach, durch den Austausch oder die Auswahl eines bestimmten Profilelements eine Anpassung der Kopfstütze erlaubt. Zweckmäßigerweise ist das Profilelement an dem Polsterträger beziehungsweise dem Basisteil befestigt. Besonders bevorzugt ist das Profilelement an dem Polsterträger formschlüssig gehalten. Optional ist auch ein Verschrauben des Profilelements mit dem Polsterträger denkbar.

Bevorzugt ist das Profilelement aus Kunststoff gefertigt. Dadurch weist das Profilelement ein geringes Eigengewicht auf und erlaubt eine vorteilhafte Kraftaufnahme.

Weiterhin ist bevorzugt vorgesehen, dass das Profilelement ein Spritzgussteil ist. Dadurch ist das Profilelement, insbesondere aus Kunststoff, vorteilhaft herstellbar, weil eine zeitnahe und kostengünstige Herstellung auch bei einer komplexen Profilstruktur möglich ist.

Gemäß einer bevorzugten Weiterbildung der Erfindung ist das Profilelement, insbesondere das aus Kunststoff gefertigte Profilelement, stoffschlüssig mit dem Basisteil verbunden. Dadurch ergibt sich eine besonders belastbare Befestigung des Profilelements an dem Basisteil, die auch bei Auftreten hoher Aufprallkräfte einen sicheren Halt des Profilelements an dem Basisteil gewährleistet. Der Stoffschluss wird bevorzugt durch Verschweißen, Verlöten oder Verkleben des Profilelements an dem Basisteil hergestellt. Alternativ oder zusätzlich zu der stoffschlüssigen Verbindung ist das Profilelement bevorzugt formschlüssig mit dem Basisteil verbunden oder an diesem befestigt. Der Formschluss wird insbesondere durch eine oder mehrere Steckverbindungen oder Rastverbindungen realisiert.

Vorzugsweise ist das Profilelement, insbesondere das aus Kunststoff gefertigte Spritzgussteil, an das Basisteil angespritzt. Dadurch ergibt sich eine einfache Herstellung sowie eine integrale Ausbildung des Profilelements an dem Polsterträger beziehungsweise dem Basisteil. Insbesondere ergibt sich dadurch der Vorteil, dass die Herstellung des Profilelements sowie dessen Befestigung an dem Basisteil in einem Schritt erfolgen können. Vorzugsweise hintergreift das Profilelement das Basisteil zumindest abschnittsweise, um zusätzlich zu der stoffschlüssigen Verbindung auch eine formschlüssige Arretierung des Profilelements an dem Basisteil zu gewährleisten.

Besonders bevorzugt ist das Profilelement elastisch verformbar ausgebildet, um zu gewährleisten, dass bei Auftreten von hohen Aufprallkräften ein Zerbrechen oder Zersplittern des Profilelements unterbleibt und der Aufprall des Kopfes auf der Kopfstütze gedämpft wird. Besonders bevorzugt ist das Polster aus einem Schaummaterial gefertigt, um eine bequeme Kopfanlage sowie eine vorteilhafte Kraftaufnahme und -verteilung zu gewährleisten.

Besonders bevorzugt weist das Polster auf einem dem Profilelement zugeordneten Halteabschnitt eine zu dem Wellenprofil korrespondierende, insbesondere komplementäre Wellenstruktur auf, sodass die Wellenstruktur des Polsters und das Wellenprofil des Polsterträgers zur Fixierung ineinander greifen. Wird das Polster an dem Polsterträger angeordnet, bewirken die ineinandergreifenden Wellenberge und Wellentäler von Wellenprofil und Wellenstruktur, dass das Polster an dem Polsterträger beziehungsweise an dem Profilelement des Polsterträgers vorteilhaft ausgerichtet und fixiert ist. Insbesondere wird durch das Ineinandergreifen beziehungsweise die Fixierung gewährleistet, dass sich das Polster zu dem Polsterträger beim Aufziehen eines Bezugs oder dergleichen nicht verschiebt. Unter dem Ineinandergreifen von Wellenprofil und Wellenstruktur ist zu verstehen, dass die Wellenberge des Wellenprofils oder der Wellenstruktur in die Wellentäler der Wellenstruktur oder des Wellenprofils eingreifen, sodass Wellenprofil und Wellenstruktur insbesondere flächig, insbesondere durchgehend flächig aneinander anliegen, sodass zum einen eine vorteilhafte Kraftübertragung von dem Polster auf das Profilelement gewährleistet ist, und dass zum anderen das Polster vorteilhaft an dem Profilelement vor einem Verschieben oder Verrutschen gesichert ist.

Optional weist das Profilelement in Horizontalerstreckung gesehen eine Krümmung, insbesondere eine konkave Krümmung auf, in welche der dann bevorzugt ebenfalls gekrümmte Halteabschnitt des Polsters, insbesondere konvex gekrümmte Halteabschnitt, eingreift, sodass auch ein horizontales beziehungsweise seitliches Verschieben des Polsters zu dem Profilelement verhindert ist. Darüber hinaus wird durch die vorteilhafte konkave Krümmung des Profilelements die Aufnahme und Ausrichtung des Kopfes bei einem Aufprall weiter verbessert.

Gemäß einer bevorzugten Weiterbildung der Erfindung ist das Basisteil des Profilträgers aus Kunststoff gefertigt. Dadurch weist die Kopfstütze insgesamt ein geringes Gewicht auf und erlaubt eine kostengünstige Herstellung.

Besonders bevorzugt weist das Basisteil mehrere horizontal benachbarte und vertikal verlaufende Versteifungsrippen auf. Durch die Versteifungsrippen wird das Basisteil, das insbesondere als dünnwandiges oder schalenförmiges Basisteil ausgebildet ist, auf einfache und kostengünstige Art und Weise versteift.

Weiterhin ist bevorzugt vorgesehen, dass an dem Basisteil zwei parallel zueinander ausgerichtete Haltestangen angeordnet sind. Dadurch ist eine eindeutige und sichere Positionierung der Kopfstütze an dem Fahrzeugsitz gewährleistet.

Der erfindungsgemäße Fahrzeugsitz mit den Merkmalen des Anspruchs 15 zeichnet sich durch die erfindungsgemäße Ausbildung der Kopfstütze aus. Es ergeben sich dadurch die bereits genannten Vorteile. Besonders bevorzugt weist der Fahrzeugsitz für jede Haltestange der Kopfstütze jeweils eine Aufnahmevertiefung auf, in welche die Haltestange zur Anordnung der Kopfstütze an dem Fahrzeugsitz einschiebbar ist. Insbesondere weisen der Fahrzeugsitz und/oder die jeweilige Haltestange Mittel zum Verrasten oder Arretieren der Haltestange in der Aufnahmevertiefung auf, um ein ungewolltes Lösen der Kopfstütze von dem Fahrzeugsitz zu verhindern.

Weitere Vorteile und bevorzugte Merkmale und Merkmalskombinationen ergeben sich insbesondere aus dem zuvor Beschriebenen. Im Folgenden soll die Erfindung anhand der Zeichnungen näher erläutert werden. Dazu zeigen
- Figur 1: einen Fahrzeugsitz mit einer vorteilhaften Kopfstütze in einer vereinfachten perspektivischen Darstellung,
- Figur 2: die Kopfstütze in einer Seitenansicht,
- Figur 3: die Kopfstütze in einer Rückansicht und
- Figur 4: eine vereinfachte Schnittdarstellung der Kopfstütze.

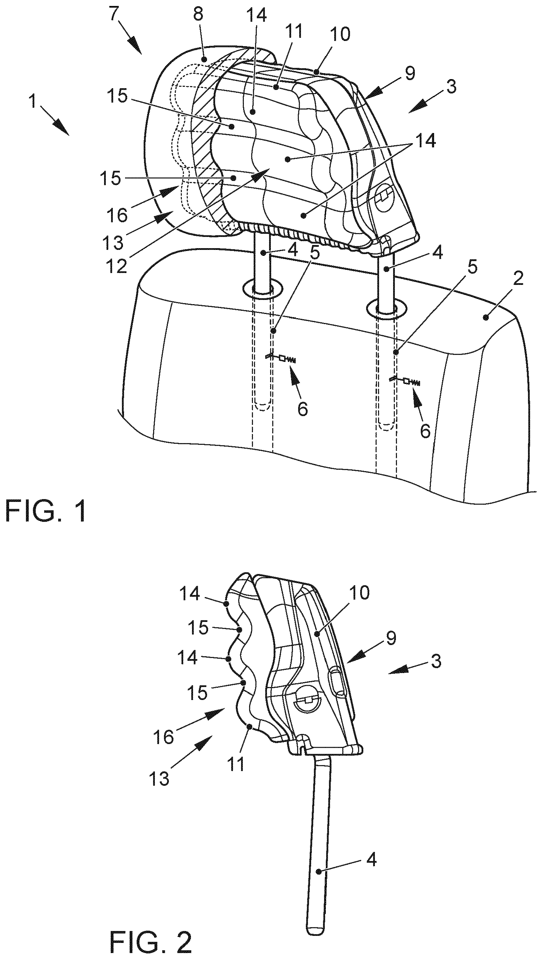

Figur 1 zeigt in einer vereinfachten perspektivischen Darstellung ein Fahrzeugsitz 1 für ein hier nicht näher dargestelltes Kraftfahrzeug. Der Fahrzeugsitz 1 weist eine Rückenlehne 2 auf, an deren oberen Ende eine Kopfstütze 3 angeordnet ist. Die Kopfstütze 3 weist dazu zwei Haltestangen 4 auf, die in Aufnahmevertiefungen 5 in der Rückenlehne in ihrer Längserstreckung eingeschoben sind. Die Haltestangen 4 sowie die Rückenlehne 2 weisen dabei Mittel 6 zum lösbaren Arretieren der Haltestangen in der jeweiligen Aufnahmevertiefung 5 auf, um die Kopfstütze 3 an der Rückenlehne 2, insbesondere in unterschiedlichen Höhen zu befestigen. Derartige Fahrzeugsitze 1 sind grundsätzlich bekannt, sodass insbesondere auch die Verrastbarkeit beziehungsweise Befestigung der Kopfstütze 3 an der Rückenlehne 2 an dieser Stelle nicht näher eingegangen werden soll.

Die Kopfstütze 3 weist einen Polsterbezug 7 mit einem aus einem Schaummaterial gefertigten Polster 8 auf, das auf einem Polsterträger 9 der Kopfstütze 3 angeordnet ist. Der Polsterträger 9 weist gemäß dem vorliegenden Ausführungsbeispiel ein Basisteil 10 sowie ein an dem Basisteil 10 befestigtes Profilelement 11 auf. Das Basisteil 10 und das Profilelement 11 sind beide bevorzugt jeweils aus Kunststoff gefertigt. Insbesondere ist das Basiselement 10 als dünnwandiges Schalenelement ausgebildet. Die Haltestangen 4 sind bevorzugt an dem Basisteil 10 befestigt.

Das Profilelement 11 ist an einer Frontseite des Basisteils 10 angeordnet, sodass das Basisteil 11 eine Frontseite 12 des Polsterträgers 9 bildet. Die Frontseite 12 ist dabei dem Kopf eines auf dem Fahrzeugsitz 1 befindlichen Benutzers zugewandt, weist also im Normalfall in Vorwärtsfahrt nach vorne.

Das Profilelement 11 ist bevorzugt auf das Basisteil 10 aufgespritzt beziehungsweise - gegossen. Dadurch entsteht eine stoffschlüssige Verbindung zwischen dem Profilelement 11 und dem Basisteil 10, wodurch das Profilelement 11 vorteilhaft an dem Basisteil 10 gehalten und mit diesem verbunden ist.

Das Profilelement 11 weist an seiner Frontseite 12 ein geschlossenes Wellenprofil 13 auf, das mehrere, vorliegend drei, vertikal benachbarte und sich geradlinig horizontal parallel zueinander erstreckende Wellenberge 14 aufweist.

Bei bestimmungsgemäßem Gebrauch erstrecken sich somit die Wellenberge 14 entlang horizontaler Linien und sind vertikal beziehungsweise in der Höhe beabstandet zueinander angeordnet, wobei zwischen zwei benachbarten Wellenbergen 14 jeweils ein Wellental 15 ausgebildet ist. Darüber hinaus ist das Profilelement 11 auf der Frontseite 12 konkav in Längserstreckung der Wellenberge 14 ausgebildet, sodass das Profilelement 11 eine vorteilhafte Positionierung und schützende Wirkung für den Kopf eines Benutzers für den Fall bietet, dass der Kopf des Benutzers beispielsweise aufgrund eines Auffahrunfalls gegen die Kopfstütze 3 aufprallt. Das Wellenprofil 13 bildet an der Frontseite 12 somit einen Kopfaufprallbereich 16 der Kopfstütze 3 aus.

Figur 2 zeigt die vorteilhafte Kopfstütze 3 in einer Seitenansicht. In dieser Ansicht sind die Wellenberge 14 und dazwischenliegende Wellentäler 15 vorteilhaft erkennbar. Die Haltestangen 14 erstrecken sich zumindest im Wesentlichen vertikal beziehungsweise senkrecht bezogen zu den Wellenbergen 14 des Wellenprofils 13.

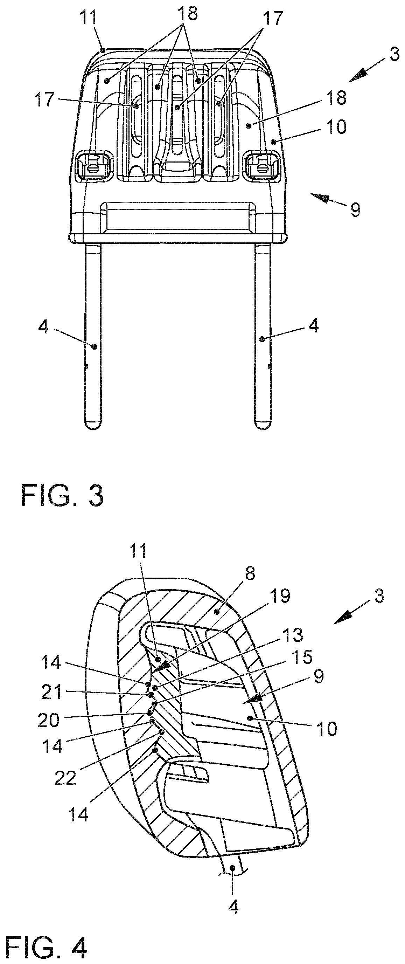

Figur 3 zeigt eine Rückansicht der Kopfstütze 3. Diese zeigt insbesondere die Ausgestaltung des Basisteils 10. Im Unterschied zu dem Profilelement 11 ist das Basisteil 10 nicht als geschlossenes Profil ausgebildet, sondern vielmehr als dünnwandiges Schalenelement, wie zuvor bereits beschrieben, gestaltet, das mehrere zur Gewichtssparung beitragende Öffnungen 17 aufweist. Darüber hinaus weist das Basisteil 10 mehrere sich vertikal erstreckende Versteifungsrippe 18 auf, die horizontal benachbart zueinander angeordnet sind. Durch die Versteifungsrippen 18 wird die Robustheit und Belastbarkeit der Kopfstütze 3 trotz seiner dünnwandigen Ausbildung erhöht, sodass auch hohe Aufprallkräfte sicher aufgenommen werden können. Das Profilelement 11 ist bevorzugt elastisch verformbar ausgebildet, sodass Aufprallkräfte direkt an dem Profilelement vorteilhaft gedämpft werden können. Zur Dämpfung trägt darüber hinaus auch noch das Polster 8 bei.

Figur 4 zeigt dazu eine Schnittdarstellung durch die Kopfstütze 3, welche das an dem Polsterträger 9 angeordnete Polster 8 zeigt. Wie Figur 4 zu entnehmen ist, umschließt das Polster 8 nahezu vollständig den Polsterträger 9. Dabei weist das Polster 8 einen Halteabschnitt 19 auf, welcher dem Profilelement 11, insbesondere dem Wellenprofil 13 zugewandt ist. Der Halteabschnitt 19 weist eine Wellenstruktur 20 auf, die korrespondierend zu dem Wellenprofil 13 derart ausgebildet ist, dass die Wellenstruktur 20 komplementär zu dem Wellenprofil 13 ausgebildet ist. Dadurch füllt die Wellenstruktur 20 die Zwischenräume zwischen den benachbarten Wellenbergen 14 des Wellenprofils 13 aus, sodass Wellenstruktur 20 und Wellenprofil 13 zur Fixierung ineinander greifen. Dazu weist die Wellenstruktur 20 ebenfalls horizontal verlaufende Wellenberge 21 und Wellentäler 22 auf, wobei die Wellenberge 21 dazu ausgebildet sind, die Wellentäler 15 des Wellenprofils 13 vollständig auszufüllen, sodass insbesondere eine im Wesentlichen insgesamt flächige Anlage des Polsters 8 zumindest im Halteabschnitt 19 an der Frontseite 12 des Profilelements 11 gewährleistet ist.

Durch die komplementäre Ausbildung von Wellenstruktur 19 und Wellenprofil 13 und die dadurch erreichte formschlüssige Fixierung wird erreicht, dass bei der Montage der Kopfstütze 3 das Polster nicht an dem Polsterträger 9 verrutscht, wenn beispielsweise ein Bezug über das Polster 8 gezogen wird. Die komplementäre Ausbildung erlaubt eine eindeutige und einfache Anordnung und Vormontierung des Polsters 8 an dem Polsterträger 9. Darüber hinaus gewährleistet die komplementäre Ausbildung eine optimale Kraftübertragung beziehungsweise Kraftableitung bei einem Kopfaufprall gegen den Kopfaufprallbereich 16.

### Bezugszeichenliste

- 1: Fahrzeugsitz
- 2: Rückenlehne
- 3: Kopfstütze
- 4: Haltestange
- 5: Aufnahmevertiefung
- 6: Mittel
- 7: Polsterbezug
- 8: Polster
- 9: Polsterträger
- 10: Basisteil
- 11: Profilelement
- 12: Frontseite
- 13: Wellenprofil
- 14: Wellenberg
- 15: Wellental
- 16: Kopfaufprallbereich
- 17: Öffnung
- 18: Versteifungsrippe
- 19: Halteabschnitt
- 20: Wellenstruktur
- 21: Wellenberg
- 22: Wellental

## Patentansprüche

1. Kopfstütze (3) für einen Fahrzeugsitz (1), mit einem Polsterträger (9), mit einem an dem Polsterträger (9) angeordneten oder anordenbaren Polster (8), und mit zumindest einer sich von dem Polsterträger (9) vertikal erstreckenden Haltestange (4) zum Befestigen der Kopfstütze (3) an dem Fahrzeugsitz (1), wobei der Polsterträger (9) auf einer sich horizontal und vertikal erstreckenden Frontseite (12) einen Kopfaufprallbereich (16) aufweist, **dadurch gekennzeichnet, dass** der Polsterträger (9) in dem Kopfaufprallbereich (16) ein geschlossenes sinusförmiges Wellenprofil (13) mit sich horizontal erstreckenden und vertikal durch Wellentäler (15) voneinander getrennt benachbarten Wellenbergen (14) aufweist.

2. Kopfstütze nach Anspruch 1, **dadurch gekennzeichnet, dass** der insbesondere aus Kunststoff gefertigte Polsterträger (9) einteilig ausgebildet ist.

3. Kopfstütze nach Anspruch 1, **dadurch gekennzeichnet, dass** der Polsterträger (9) mehrteilig ausgebildet ist, mit einem die Haltestange (4) tragenden Basisteil (10) und mit einem das Wellenprofil (13) aufweisenden Profilelement (11).

4. Kopfstütze nach Anspruch 3, **dadurch gekennzeichnet, dass** das Profilelement (11) aus Kunststoff gefertigt ist.

5. Kopfstütze nach einem der Ansprüche 3 und 4, **dadurch gekennzeichnet, dass** das Profilelement (11) ein Spritzgussteil ist.

6. Kopfstütze nach einem der Ansprüche (integriert) 3 bis 5, **dadurch gekennzeichnet, dass** das Profilelement (11) stoffschlüssig und/oder formschlüssig mit dem Basisteil (10) verbunden ist.

7. Kopfstütze nach einem der Ansprüche 3 bis 6, **dadurch gekennzeichnet, dass** das Profilelement (11) an das Basisteil (10) angespritzt ist.

8. Kopfstütze nach einem der Ansprüche 3 bis 7, **dadurch gekennzeichnet, dass** das Profilelement (11) elastisch verformbar ausgebildet ist.

9. Kopfstütze nach einem der vorhergehenden Ansprüche, **dadurch gekennzeichnet, dass** das Polster (8) aus einem Schaummaterial gefertigt ist.

10. Kopfstütze nach einem der vorhergehenden Ansprüche, **dadurch gekennzeichnet, dass** das Polster (8) auf einem dem Profilelement (11) zugeordneten Halteabschnitt (19) eine zu dem Wellenprofil (13) korrespondierende Wellenstruktur (20) aufweist, sodass die Wellenstruktur (20) des Polsters (8) und das Wellenprofil (13) des Polsterträgers (9) zur Fixierung ineinander greifen.

11. Kopfstütze nach einem der vorhergehenden Ansprüche, **dadurch gekennzeichnet, dass** das Wellenprofil (13) des Polsterträgers (9) in seiner horizontalen Erstreckung eine insbesondere konkave Krümmung aufweist.

12. Kopfstütze nach einem der Ansprüche 3 bis 11, **dadurch gekennzeichnet, dass** das Basisteil (10) aus Kunststoff gefertigt ist.

13. Kopfstütze nach einem der Ansprüche 3 bis 12, **dadurch gekennzeichnet, dass** das Basisteil (10) mehrere horizontal benachbarte und vertikal verlaufende Versteifungsrippen (18) aufweist.

14. Kopfstütze nach einem der vorhergehenden Ansprüche, **dadurch gekennzeichnet, dass** an der Kopfstütze (3) zwei Haltestangen (4) parallel zueinander ausgerichtet angeordnet sind.

15. Fahrzeugsitz (1) mit einer Kopfstütze (3) gemäß einem der Ansprüche 1 bis 14.

## Claims

1. Headrest (3) for a vehicle seat (1), the headrest comprising a cushion support (9) that has a cushion (8) which is arranged or arrangeable on the cushion support (9), and comprising at least one holding rod (4) which extends vertically from the cushion support (9) for fastening the headrest (3) to the vehicle seat (1), wherein the cushion support (9) has a head impact region (16) on a horizontally and vertically extending front side (12), **characterized in that** the cushion support (9) in the head impact area (16) has a closed sinusoidal wave-shaped profile (13) comprising horizontally extending and adjacent wave crests (14) separated from one another vertically by wave troughs (15).

2. Headrest according to claim 1, **characterized in that** the cushion support (9), made in particular of plastics material, is formed in one piece.

3. Headrest according to claim 1, **characterized in that** the cushion support (9) is formed in several parts, comprising a base part (10) which carries the holding rod (4) and comprising a profiled element (11) which has the wave-shaped profile (13).

4. Headrest according to claim 3, **characterized in that** the profiled element (11) is made of plastics material.

5. Headrest according to any of claims 3 and 4, **characterized in that** the profiled element (11) is an injection-molded part.

6. Headrest according to any of claims (integrated) 3 to 5,
**characterized in that** the profiled element (11) is connected to the base part (10) in a materially bonded and/or form-fitting manner.

7. Headrest according to any of claims 3 to 6, **characterized in that** the profiled element (11) is molded onto the base part (10).

8. Headrest according to any of claims 3 to 7, **characterized in that** the profiled element (11) is designed to be elastically deformable.

9. Headrest according to any of the preceding claims, **characterized in that** the cushion (8) is made of a foam material.

10. Headrest according to any of the preceding claims, **characterized in that,** on a holding portion (19) associated with the profiled element (11), the cushion (8) has a wave-shaped structure (20) which corresponds to the wave-shaped profile (13), and therefore the wave-shaped structure (20) of the cushion (8) and the wave-shaped profile (13) of the cushion support (9) interlock with each other for fixing in position.

11. Headrest according to any of the preceding claims, **characterized in that** the wave-shaped profile (13) of the cushion support (9) has an in particular concave curvature in its horizontal extension.

12. Headrest according to any of claims 3 to 11, **characterized in that** the base part (10) is made of plastics material.

13. Headrest according to any of claims 3 to 12, **characterized in that** the base part (10) has a plurality of horizontally adjacent and vertically extending reinforcing ribs (18).

14. Headrest according to any of the preceding claims, **characterized in that** two holding rods which are oriented parallel to each other (4) are arranged on the headrest (3).

15. Vehicle seat (1) comprising a headrest (3) according to any of claims 1 to 14.

## Revendications

1. Appui-tête (3) pour un siège de véhicule (1), comportant un support pour coussin (9), comportant un coussin (8) disposé ou pouvant être disposé sur le support pour coussin (9), et comportant au moins une barre de maintien (4) s'étendant verticalement depuis le support pour coussin (9) et permettant de fixer l'appui-tête (3) sur le siège de véhicule (1), dans lequel le support pour coussin (9) présente, sur un côté frontal (12) s'étendant horizontalement et verticalement, une zone d'impact de tête (16), **caractérisé en ce que** le support pour coussin (9) présente dans la zone d'impact de tête (16) un profil ondulé (13) sinusoïdal fermé comportant des crêtes d'ondulations (14) voisines, s'étendant horizontalement et verticalement et séparées les unes des autres par des creux d'ondulations (15).

2. Appui-tête selon la revendication 1, **caractérisé en ce que** le support pour coussin (9), en particulier fabriqué en matière plastique, est réalisé d'une seule pièce.

3. Appui-tête selon la revendication 1, **caractérisé en ce que** le support pour coussin (9) est réalisé en plusieurs parties, avec une partie formant base (10) portant la barre de maintien (4) et avec un élément profilé (11) présentant le profil ondulé (13).

4. Appui-tête selon la revendication 3, **caractérisé en ce que** l'élément profilé (11) est fabriqué en matière plastique.

5. Appui-tête selon l'une des revendications 3 et 4, **caractérisé en ce que** l'élément profilé (11) est une pièce moulée par injection.

6. Appui-tête selon l'une des revendications (intégrées) 3 à 5,
**caractérisé en ce que** l'élément profilé (11) est relié à la partie formant base (10) par liaison de matière et/ou par complémentarité de forme.

7. Appui-tête selon l'une des revendications 3 à 6, **caractérisé en ce que** l'élément profilé (11) est moulé par injection sur la partie formant base (10).

8. Appui-tête selon l'une des revendications 3 à 7, **caractérisé en ce que** l'élément profilé (11) est réalisé de manière à être déformable élastiquement.

9. Appui-tête selon l'une des revendications précédentes,
**caractérisé en ce que** le coussin (8) est fabriqué à partir d'un matériau en mousse.

10. Appui-tête selon l'une des revendications précédentes,
**caractérisé en ce que** le coussin (8) présente, sur une section de maintien (19) associée à l'élément profilé (11), une structure ondulée (20) correspondant au profil ondulé (13), de sorte que la structure ondulée (20) du coussin (8) et le profil ondulé (13) du support pour coussin (9) viennent en prise l'un dans l'autre pour la fixation.

11. Appui-tête selon l'une des revendications précédentes,
**caractérisé en ce que** le profil ondulé (13) du support pour coussin (9) présente une courbure en particulier concave dans son extension horizontale.

12. Appui-tête selon l'une des revendications 3 à 11, **caractérisé en ce que** la partie formant base (10) est fabriquée en matière plastique.

13. Appui-tête selon l'une des revendications 3 à 12, **caractérisé en ce que** la partie formant base (10) présente plusieurs nervures de renforcement (18) adjacentes horizontalement et s'étendant verticalement.

14. Appui-tête selon l'une des revendications précédentes,
**caractérisé en ce que** deux barres de maintien (4) sont disposées de manière à être orientées parallèlement l'une à l'autre sur l'appui-tête (3).

15. Siège de véhicule (1) comportant un appui-tête (3) selon l'une des revendications 1 à 14.
